# EUROPÄISCHE PATENTSCHRIFT

(11) **EP 1 389 488 B1**
(45) Veröffentlichungstag und Bekanntmachung des Hinweises auf die Patenterteilung: **12.03.2008**
(21) Anmeldenummer: 03018121.8
(22) Anmeldetag: 08.08.2003
(51) Int. Cl.: B05B 3/02, B05B 3/10, B05B 5/04

(54) **Rotationszerstäuberturbine**
Rotary atomizer with a turbine
Atomiseur rotatif à turbine

(30) Priorität: 13.08.2002 DE 10237128
(43) Veröffentlichungstag der Anmeldung: 18.02.2004
(73) Patentinhaber: Dürr Systems GmbH, 70435 Stuttgart (DE)
(72) Erfinder: Herre, Frank, 71739 Oberriexingen (DE); Baumann, Michael, 74223 Flein (DE); Krumma, Harry, 74357 Bönnigheim (DE)
(74) Vertreter: Heusler, Wolfgang

(56) Entgegenhaltungen:
- EP-A- 0 330 321
- WO-A-02/086515
- DE-A1- 3 002 206

## Beschreibung

Die Erfindung betrifft eine Rotationszerstäuberturbine zum Antrieb eines Glockentellers in einem Rotationszerstäuber für eine Beschichtungsanlage gemäß dem Oberbegriff des Anspruchs 1 sowie einen Rotationszerstäuber gemäß Anspruch 13 mit einer derartigen Rotationszerstäuberturbine und ein Betriebsverfahren für eine Rotationszerstäuberturbine gemäß Anspruch 14.

In modernen Lackieranlagen werden bekanntermaßen Rotationszerstäuber eingesetzt, bei denen ein sogenannter Glockenteller von einer Druckluftturbine mit hohen Drehzahlen angetrieben wird. Der Glockenteller ist hierbei in der Regel kegelstumpfförmig und erweitert sich in Sprührichtung, wobei das aufzutragende Beschichtungsmittel in dem kegelstumpfförmigen Glockenteller aufgrund der Zentrifugalkräfte axial und insbesondere radial beschleunigt wird, so dass an der Glockehtellerabrisskante ein kegelförmiger Sprühstrahl entsteht.

Die Drehzahl der Druckluftturbine liegt hierbei im Bereich von 15.000 bis 80.000 U/Min., so dass das Abbremsen des Glockentellers bis zum Stillstand einige Zeit benötigt. Es ist deshalb weiterhin bekannt, das Turbinenrad der Druckluftturbine zum Abbremsen entgegen der Drehrichtung mit einer sogenannten Bremsluft anzuströmen, um den Glockenteller möglichst schnell bis zum Stillstand abzubremsen. Bei dem Bremsvorgang muss jedoch darauf geachtet werden, dass die Anströmung mit der Bremsluft rechtzeitig beendet wird, damit sich die Drehrichtung des Glockentellers nicht umkehrt.

Aus DE 43 06 800 C2 oder aus DE 300 22 06 ist weiterhin eine Rotationszerstäuberturbine bekannt die eine Erfassung der Drehzahl des Glockentellers ermöglicht. Hierzu weist das Turbinenrad an seiner dem Glockenteller abgewandten Stirnfläche eine optische Markierung in Form mehrerer reflektierender Markierungselemente auf, die in Drehrichtung äquidistant verteilt angeordnet sind. Diese optischen Markierungen werden im Betrieb über einen Lichtwellenleiter von einem optischen Sensor abgetastet, wobei die von dem optischen Sensor erzeugte Impulsrate die Drehgeschwindigkeit des Turbinenrades wiedergibt.

Bei den bekannten Rotationszerstäubern wird die Anströmung mit Bremsluft während eines Bremsvorgangs beendet, wenn die von dem optischen Sensor erfasste Drehgeschwindigkeit des Turbinenrades einen vorgegebenen Grenzwert unterschreitet. Auf diese Weise wird verhindert, dass sich die Drehrichtung des Turbinenrades während eines Bremsvorgangs umkehrt.

Nachteilig an dieser Art der Beendigung des Bremsvorgangs ist jedoch, dass das Turbinenrad in dem Drehzahlbereich unterhalb des vorgegebenen Grenzwertes nur noch durch Eigenreibung abgebremst wird, so dass das Turbinenrad praktisch nicht zum Stillstand kommt.

Aus der nachveröffentlichten älteren Patentanmeldung (WO 02/086515 A1) ist ein Rotationszerstäuber bekannt, der ebenfalls eine Drehrichtungserkennung ermöglicht. Diese Patentanmeldung enthält jedoch keine Angabe über die Anordnung der Turbinenschaufeln an dem Turbinenrad.

Der Erfindung liegt somit die Aufgabe zugrunde, die vorstehend beschriebene bekannte Druckluftturbine mit einer optischen Erfassung der Drehzahl des Turbinenrades dahingehend zu verbessern, dass das Turbinenrad bei einem Bremsvorgang möglichst schnell zum Stillstand gebracht werden kann.

Die Aufgabe wird, ausgehend von der eingangs beschriebenen bekannten Rotationszerstäuberturbine gemäß dem Oberbegriff des Anspruchs 1, durch die kennzeichnenden Merkmale des Anspruchs 1 und hinsichtlich eines kompletten Rotationszerstäubers durch die Merkmale des Anspruchs 13 gelöst. Weiterhin wird die Aufgabe durch ein Betriebsverfahren für eine Rotationszerstäuberturbine gemäß Anspruch 14 gelöst.

Die Erfindung umfasst die allgemeine technische Lehre, nicht nur den Absolutwert der Drehgeschwindigkeit des Turbinenrades zu erfassen, sondern auch dessen Drehrichtung Die Anströmung mit Bremsluft kann dann genau zu dem Zeitpunkt beendet werden, wenn sich die Drehrichtung des Turbinenrades gerade umkehrt. Es ist dann also nicht mehr erforderlich, dass die Anströmung mit Bremsluft bereits dann beendet wird, wenn die Drehzahl des Turbinenrades einen vorgegebenen Grenzwert unterschreitet. Auf diese Weise kann das Turbinenrad wesentlich schneller zum Stillstand gebracht werden, da der gesamte Drehzahlbereich bis zum Stillstand für die Anströmung mit Bremsluft genutzt werden kann.

Es reicht jedoch oftmals aus, wenn die Anströmung des Turbinenrades mit der Bremsluft bereits beendet wird, wenn die Rotationsenergie bzw. die Drehgeschwindigkeit des Glockentellers hinreichend weit abgenommen hat, um eine Verletzung des Bedienungspersonals durch den rotierenden Glockenteller auszuschlie-ßen. Auch bei einer derartigen früzeitigeren Abschaltung der Bremsluft vor einer Drehrichtungsumkehr des Turbinenrdes ist die erfindungsgemäße Drehrichtungserkennung jedoch vorteilhaft, um Fehlsteuerungen zu verhindern, wodurch die Betriebssicherheit erhöht wird.

Die erfindungsgemäße Rotationszerstäuberturbine weist deshalb vorzugsweise eine Markierung für den Drehwertgeber auf, die eine drehrichtungsabhängige Information enthält, so dass der Drehwertgeber die Drehrichtung des Turbinenrades ermitteln kann. Es ist hierbei nicht erforderlich, dass die Markierung mit der drehrichtungsabhängigen Information direkt an dem Turbinenrad angebracht ist. Es ist vielmehr auch möglich, dass die Markierung mit der drehrichtungsabhängigen Information an einer separaten Markierungsscheibe angeordnet ist, die mit dem Turbinenrad umläuft. Vorzugsweise ist die Markierung mit der drehrichtungabhängigen Information jedoch an einer Stirnfläche des Turbinenrades oder an dessen Mantelfläche angebracht.

Eine alternative Lösung.sieht dagegen vor, dass zur Drehrichtungserkennung ein zusätzlicher Drehwertgeber vorgesehen ist. Beispielsweise können zwei Drehwertgeber vorgesehen sein, die bezüglich der Drehrichtung des Turbinenrades versetzt angeordnet sind und demzufolge phasenverschobene Ausgangssignale liefern. Aus der Phasenverschiebung zwischen den beiden Ausgangssignalen kann dann die Drehrichtung des Turbinenrades ermittelt werden.

In einer bevorzugten Ausführungsform besteht die Markierung an dem Turbinenrad aus mehreren Gruppen von Markierungselementen, die in Drehrichtung verteilt angeordnet sind, wobei die Anzahl der Markierungselemente in jeder Gruppe in einer Drehrichtung zunimmt und in der entgegengesetzten Drehrichtung abnimmt, um eine Drehrichtungserkennung zu ermöglichen. Beispielsweise ist es möglich, dass in der ersten Gruppe nur ein einziges Markierungselement angeordnet ist, während die in Drehrichtung folgende Gruppe zwei Markierungselemente enthält. Die in Drehrichtung nächste Gruppe kann dann beispielsweise drei Markierungselemente enthalten. Der Drehwertgeber erzeugt dann in Abhängigkeit von der Drehrichtung entweder Signalpakete mit einer steigenden Impulsanzahl oder mit einer fallenden Impulsanzahl, woraus sich die Drehrichtung des Turbinenrades ermitteln lässt.

In einer anderen Ausführungsform der Erfindung weist die Markierung an dem Turbinenrad dagegen mindestens zwei benachbarte Markierungselemente mit einer unterschiedlichen Winkelerstreckung auf, um eine Drehrichtungserkennung zu ermöglichen. Beispielsweise kann sich das eine Markierungselement über einen Winkel von 45° erstrecken, während sich das andere Markierungselement über einen Winkel von 90° erstreckt. Der Drehwertgeber erzeugt dann jeweils Impulspakete, die aus einem kurzen und einem langen Impuls bestehen, wobei die Abfolge dieser Impulse unterschiedlicher Länge die Drehrichtung wiedergibt.

In einer vorteilhaften Variante.der Erfindung von eigener schutzwürdiger Bedeutung ist zusätzlich eine Markierung an dem Turbinenrad vorgesehen, die eine Zusatzinformation über den Typ der Rotationszerstäuberturbine, die Seriennummer der Rotationszerstäuberturbine oder eine kundenspezifische Zusatzinformation enthält, die von dem Drehwertgeber ausgelesen werden kann. Die elektronische Steuerung des Rotationszerstäubers kann dann anhand der auf dem Turbinenrad angebrachten Zusatzinformation erkennen, ob die eingebaute Rotationszerstäuberturbine zu dem Typ des Rotationszerstäubers technisch kompatibel ist. Auf diese Weise kann verhindert werden, dass Ersatzteile von nichtautorisierten Herstellern eingebaut werden, welche die technischen . Spezifikationen der Originalprodukte nicht erfüllen. Die Zusatzinformation kann beispielsweise durch mehrere Markierungselemente an dem Turbinenrad binär codiert werden. Ein Binärcode "1001101" kann beispielsweise durch eine Abfolge von Markierungselementen an vorgegebenen Positionen auf dem Turbinenrad codiert werden, wobei eine "1" durch ein and em Turbinenrad angebrachtes Markierungselement wiedergegeben wird, während eine "0" durch ein an der entsprechenden Position fehlendes Markierungselement codiert wird.

Die Erfindung ist nicht auf die vorstehend beschriebenen optischen Markierungen beschränkt. Es ist vielmehr auch möglich, magnetische Markierungen vorzusehen, die von einem Magnetfeldsensor erfasst werden. Darüber hinaus kann auch ein kapazitiver Sensor eingesetzt werden, falls die Markierung dielektrische Eigenschaften aufweist. Ferner kann auch ein mechanischer Sensor als Drehwertgeber verwendet werden, wobei die Markierung ein Kopplungsglied ist, welches das Turbinenrad mechanisch mit dem Sensor koppelt.

Zusätzlich zu der vorstehend beschriebenen Rotationszerstäuberturbine umfasst die Erfindung auch einen vollständigen Rotationszerstäuber mit einer erfindungsgemäßen Rotationszerstäuberturbine sowie ein Betriebsverfahren für die erfindungsgemäße Rotationszerstäuberturbine.

Bei dem erfindungsgemäßen Betriebsverfahren wird die Drehrichtung des Turbinenrades ermittelt und die Anströmung des Turbinenrades mit der Antriebsluft und/oder der Bremsluft in Abhängigkeit von der ermittelten Drehrichtung gesteuert.

Der im Rahmen der Erfindung verwendete Begriff einer Steuerung der Anströmung ist allgemein zu verstehen und nicht auf ein regelungstheoretisches Begriffsverständnis im engeren Sinne beschränkt. Vielmehr umfasst die Erfindung auch Ausführungsformen, bei denen die Anströmung des Turbinenrades im Rahmen einer Rückkopplungsschleife geregelt wird.

In einer bevorzugten Ausführungsform des erfindungsgemäßen Betriebsverfahrens wird die Anströmung mit der Bremsluft bei einem Bremsvorgang beendet, wenn sich die Drehrichtung des Turbinenrades umkehrt.

Vorzugsweise wird die Anströmung des Turbinenrades jedoch in Abhängigkeit von der Drehgeschwindigkeit und von der Drehrichtung des Turbinenrades gesteuert. Beispielsweise kann die Anströmung des Turbinenrades mit der Bremsluft beendet werden, wenn die Drehgeschwindigkeit des Turbinenrades einen vorgegebenen Grenzwert unterschreitet oder wenn sich die Drehrichtung des Turbinenrades umkehrt.

Andere vorteilhafte Weiterbildungen der Erfindung sind in den Unteransprüchen gekennzeichnet oder werden nachstehend zusammen mit der Beschreibung des bevorzugten Ausführungsbeispiels anhand der Figuren näher erläutert. Es zeigen:
- Fig. 1: eine Seitenansicht eines erfindungsgemäßen Turbinenrades einer Rotationszerstäuberturbine,
- Fig. 2: eine aus dem Stand der Technik bekannte Markierung für ein Turbinenrad einer Rotationszerstäuberturbine,
- Fig. 3a-5a: Impulsdiagramme, die von verschiedenen erfindungsgemäßen Markierungen erzeugt werden sowie
- Fig. 3b-5b: axiale Aufsichten auf das Turbinenrad aus Fig. 1 mit den Markierungen entsprechend Fig. 3a-5a.

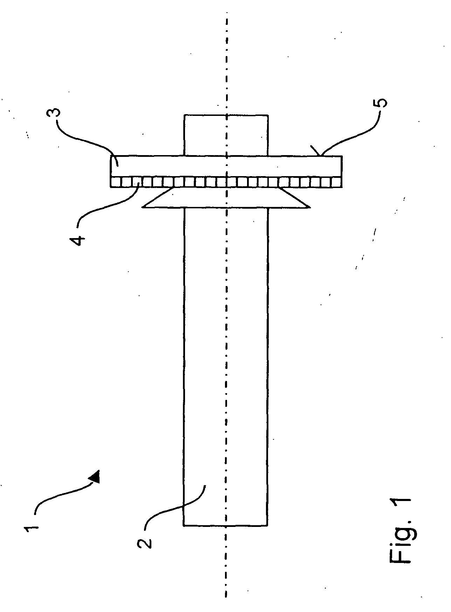

Die Seitenansicht in Figur 1 zeigt ein weitgehend herkömmliches Turbinenrad 1, das in einer Rotationszerstäuberturbine eingesetzt werden kann, wie beispielsweise aus DE 43 06 800 C2 bekannt ist. Hinsichtlich der konstruktiven Gestaltung der Rotationszerstäuberturbine und des kompletten Rotationszerstäubers wird deshalb zur Vereinfachung auf DE 43 06 800 C2 verwiesen, deren Inhalt der vorliegenden Beschreibung in vollem Umfang zuzurechnen ist.

Das erfindungsgemäße Turbinenrad 1 weist eine Glockentellerwelle 2 auf, wobei auf der in Figur 1 linksliegenden Seite der Glockentellerwelle 2 ein Glockenteller montiert werden kann. Weiterhin weist das Turbinenrad 1 einen kreisscheibenförmigen Läufer 3 auf, wobei auf der glockentellerseitigen Stirnfläche des Läufers 3 zahlreiche Turbinenschaufeln 4 über den Umfang verteilt angeordnet sind. Während des Betriebs des Rotationszerstäubers werden die Turbinenschaufeln 4 durch eine sogenannte Antriebsluft angeströmt, was hinlänglich bekannt ist.

Auf der dem Glockenteller abgewandten Stirnfläche 5 des Läufers 3 ist eine optische Markierung angebracht, die sowohl eine Bestimmung der Drehgeschwindigkeit des Turbinenrades 1 als auch eine Bestimmung der Drehrichtung des Turbinenrades 1 ermöglicht.

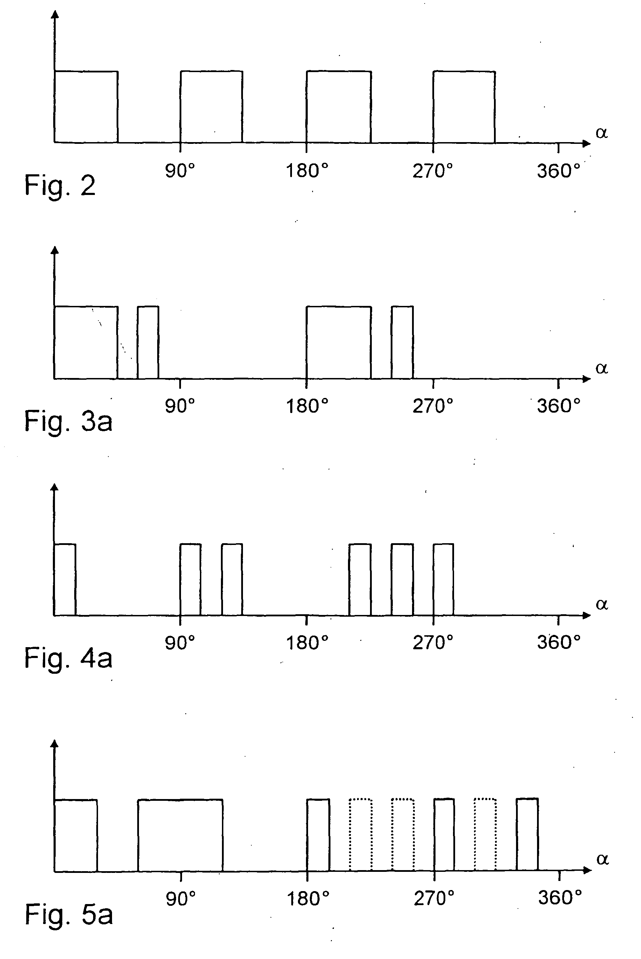

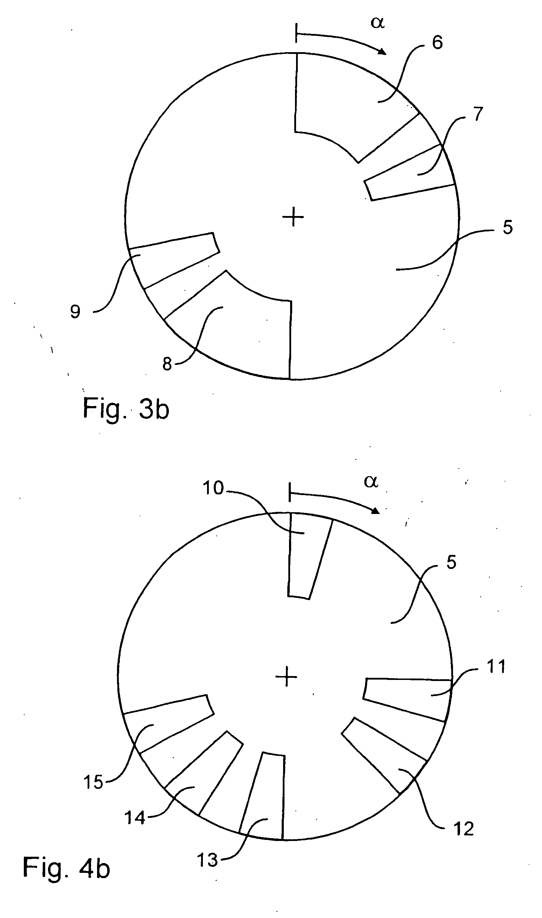

Die Figuren 3b-5b zeigen verschiedene Ausführungsbeispiele dieser Markierung, wobei die Figuren 3a-5a die zugehörigen Impulsdiagramme zeigen, die von dem Drehwertgeber erzeugt werden und eine Drehrichtungs- und Drehgeschwindigkeitserkennung ermöglichen.

Bei dem Ausführungsbeispiel gemäß Figur 3b besteht die optische Markierung aus reflektierenden Markierungselementen 6 bis 9, die auf der ansonsten matten Stirnfläche 5 des Läufers 3 angebracht sind und von einem optischen Sensor abgetastet werden.

Die Markierungselemente 6 und 7 bilden hierbei eine Gruppe, während die Markierungselemente 8, 9 eine zweite Gruppe bilden. Entscheidend ist hierbei, dass die Markierungselemente 6., 8 eine größere Winkelerstreckung aufweisen als die Markierungselemente 7, 9. Dies äußert sich in dem zugehörigen Impulsdiagramm gemäß Figur 3a dahingehend, dass ein längerer Impuls jeweils mit einem kürzeren Impuls gemeinsam auftritt, wobei die Abfolge der beiden Impulse die Drehrichtung des Turbinenrades 1 wiedergibt.

Die Drehrichtungserkennung wird hierbei also dadurch ermöglicht, dass die einzelnen Markierungselemente 6, 7 bzw. 8, 9 eine unterschiedliche Winkelerstreckung aufweisen.

Figur 4b zeigt dagegen ein Ausführungsbeispiel einer Markierung, die aus drei Gruppen von Markierungselementen 10 bis 15 besteht. Die erste Gruppe besteht hierbei nur aus dem Markierungselement 10, während die zweite Gruppe mit den Markierungselementen 11, 12 zwei Markierungselemente enthält. Die dritte Gruppe besteht schließlich aus den Markierungselementen 13 bis 15 und enthält somit also drei Markierungselemente.

Dies äußert sich in dem zugehörigen Impulsdiagramm gemäß Figur 4a dahingehend, dass die Anzahl der Impulse in jeder Gruppe in Abhängigkeit von der Drehrichtung entweder zunimmt oder abnimmt, woraus sich in einfacher Weise die Drehrichtung des Turbinenrades 1 ermitteln lässt.

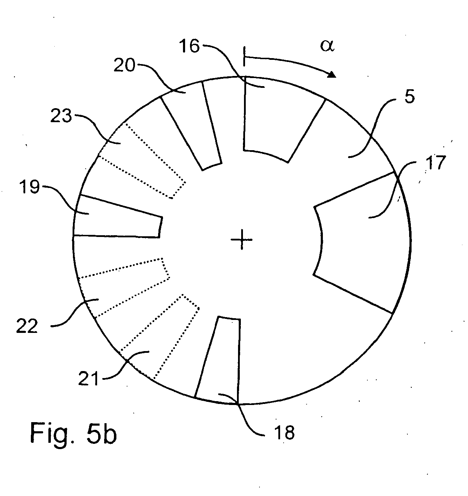

Schließlich zeigt Figur 5b ein weiteres Ausführungsbeispiel einer Markierung, die aus mehreren Markierungselementen 16 bis 20 besteht.

Die beiden Markierungselemente 16 und 17'ermöglichen hierbei eine Drehgeschwindigkeitserkennung und eine Drehrichtungserkennung in der vorstehend anhand der Figuren 3a und 3b beschriebenen Weise, da die beiden Markierungselemente 16, 17 eine unterschiedliche Winkelerstreckung aufweisen.

Darüber hinaus ermöglicht die Markierung hierbei eine Binärcodierung eines 6-Bit-Datenwortes durch die Markierungen 18, 19, 20 in Verbindung mit den fehlenden Markierungen 21 bis 23, die hier gestrichelt dargestellt sind. Im vorliegenden Fall würden die Markierungselemente 18 bis 23 also das binäre Datenwort "100101"' codieren, das beispielsweise den Typ der Rotationszerstäuberturbine angeben könnte. Während des Betriebs prüft also ein optischer Sensor, ob an den vorgegebenen Winkelpositionen für die Markierungselemente 18 bis 23 reflektierende Markierungselemente vorhanden sind oder nicht, um den zugehörigen Binärwert "0" oder "1" zu ermitteln.

## Patentansprüche

1. Rotationszerstäuberturbine zum Antrieb eines Glockentelchen glockentellerseitigen Turbinenschaufeln (4) und mit mindestens einer mit dem Turbinenrad (1) drehfest verbundenen Markierung (6-9; 10-15; 16-20) zur Ansteuerung eines Drehwertgebers für eine Erfassung der Drehgeschwindigkeit des Turbinenrads (1), wobei sich die Markierung (6-9; 10-15; 16-20) mit dem Turbinenrad (1) dreht und der Drehwertgeber auf die Markierung (6-9; 10-15; 16-20) anspricht,
**dadurch gekennzeichnet, dass**
die Markierung (6-9; 10-15; 16-20) für den Drehwertgeber eine drehrichtungsabhängige Information enthält oder ein zusätzlicher Drehwertgeber zur Drehrichtungserkennung vorgesehen ist.

2. Rotationszerstäuberturbine nach Anspruch 1, **dadurch gekennzeichnet, dass** die Markierung (6-9; 10-15; 16-20) an dem Turbinenrad (1) aus mehreren Gruppen von Markierungselementen (10-15) besteht, die in Drehrichtung verteilt angeordnet sind, wobei die Anzahl der Markierungselemente in jeder Gruppe in einer Drehrichtung zunimmt und in der entgegengesetzten Drehrichtung abnimmt, um eine Drehrichtungserkennung zu ermöglichen.

3. Rotationszerstäuberturbine nach Anspruch 1, **dadurch gekennzeichnet, dass** die Markierung (6-9; 10-15; 16-20) an dem Turbinenrad (1) mindestens zwei benachbarte Markierungselemente (6, 7; 16, 17) mit einer unterschiedlichen Winkelerstreckung aufweist, um eine Drehrichtungserkennung zu ermöglichen.

4. Rotationszerstäuberturbine nach mindestens einem der vorhergehenden Ansprüche, **dadurch gekennzeichnet, dass** die Markierung (6-9; 10-15; 16-20) an dem Turbinenrad (1) eine Zusatzinformation über den Typ der Rotationszerstäuberturbine, die Seriennummer der Rotationszerstäuberturbine oder eine kundenspezifische Zusatzinformation enthält, die von dem Drehwertgeber ausgelesen werden kann.

5. Rotationszerstäuberturbine nach Anspruch 4, **dadurch gekennzeichnet, dass** die Markierung (6-9; 10-15; 16-20) mit der Zusatzinformation durch mehrere Markierungselemente (18-23) binär codiert ist.

6. Rotationszerstäuberturbine nach Anspruch 5, **dadurch gekennzeichnet, dass** die Markierungselemente für die binäre Kodierung an dem Turbinenrad (1) an vorgegebenen Winkelpositionen und äquidistant angebracht sind.

7. Rotationszerstäuberturbine nach mindestens einem der vorhergehenden Ansprüche, **dadurch gekennzeichnet, dass** der Drehwertgeber ein optischer Sensor und die Markierung (6-9; 10-15; 16-20) eine optische Markierung (6-9; 10-15; 16-20) ist.

8. Rotationszerstäuberturbine nach mindestens einem der vorhergehenden Ansprüche, **dadurch gekennzeichnet, dass** der Drehwertgeber ein Magnetfeldsensor und die Markierung (6-9; 10-15; 16-20) magnetisch ist.

9. Rotationszerstäuberturbine nach mindestens einem der vorhergehenden Ansprüche, **dadurch gekennzeichnet, dass** der Drehwertgeber ein kapazitiver Sensor und die Markierung (6-9; 10-15; 16-20) dielektrisch ist.

10. Rotationszerstäuberturbine nach mindestens einem der vorhergehenden Ansprüche, **dadurch gekennzeichnet, dass** der Drehwertgeber ein mechanischer Sensor und die Markierung (6-9; 10-15; 16-20) ein Kopplungsglied ist, welches das Turbinenrad (1) mechanisch mit dem Sensor koppelt.

11. Rotationszerstäuberturbine nach mindestens einem der vorhergehenden Ansprüche, **dadurch gekennzeichnet, dass die** Markierung (6-9; 10-15; 16-20) auf einer Stirnfläche des Turbinenrades (1) angebracht ist.

12. Rotationszerstäuberturbine nach mindestens einem der vorhergehenden Ansprüche, **dadurch gekennzeichnet, dass** die Markierung (6-9; 10-15; 16-20) auf einer Mantelfläche des Turbinenrades (1) angebracht ist.

13. Rotationszerstäuber mit einer Rotationszerstäuberturbine nach mindestens einem der vorhergehenden Ansprüche.

14. Betriebsverfahren für eine Rotationszerstäuberturbine mit einem Turbinenrad (1) zum Antrieb eines Glockentellers, wobei an dem Turbinenrad (1) glockentellerseitig zahlreiche Turbinenschaufeln (4) angeordnet sind, mit den folgenden Schritten:
- Anströmung des Turbinenrades (1) mit einem Antriebsgas oder gegenläufige Anströmung des Turbinenrades (1) mit einem Bremsgas zum Abbremsen des Turbinenrades (1),
**gekennzeichnet durch** die
- Ermittlung der Drehrichtung des Turbinenrades (1) und die
- Steuerung der Anströmung des Turbinenrades (1) mit dem Antriebsgas und/oder dem Bremsgas in Abhängigkeit von der ermittelten Drehrichtung des Turbinenrades (1).

15. Betriebsverfahren nach Anspruch 14, **dadurch gekennzeichnet, dass** die Anströmung mit dem Bremsgas beim Abbremsen des Turbinenrades (1) beendet wird, wenn sich die Drehrichtung des Turbinenrades (1) ändert.

16. Betriebsverfahren nach Anspruch 14 und/oder Anspruch 15, **dadurch gekennzeichnet, dass** die Drehgeschwindigkeit des Turbinenrades (1) ermittelt wird und die Anströmung mit dem Antriebsgas und/oder dem Bremsgas in Abhängigkeit sowohl von der ermittelten Drehrichtung als auch von der ermittelten Drehgeschwindigkeit gesteuert wird.

17. Betriebsverfahren nach Anspruch 16, **dadurch gekennzeichnet, dass** beim Abbremsen des Turbinenrades (1) die Anströmung mit dem Bremsgas beendet wird, wenn sich die Drehrichtung des Turbinenrades (1) ändert und/oder wenn die Drehgeschwindigkeit des Turbinenrades (1) einen vorgegebenen Grenzwert unterschreitet.

## Claims

1. A rotary atomiser turbine for driving a bell plate with a rotatably mounted turbine wheel (1) with numerous turbine blades (4) on the bell plate side and with at least one marking (6-9; 10-15; 16-20), which is rotationally fixedly connected to the turbine wheel (1), for activating a rotary value transmitter for detecting the rotary speed of the turbine wheel (1), wherein the marking (6-9; 10-15; 16-20) rotates with the turbine wheel (1) and the rotary value transmitter responds to the marking (6,9; 10,15; 16-20), **characterised in that** the marking (6-9; 10-15; 16-20) includes information for the rotary value transmitter which is dependent on the direction of rotation or an additional rotary value transmitter is provided for detecting the direction of rotation.

2. A rotary atomiser turbine as claimed in claim 1, **characterised in that** the marking (6-9; 10-15; 16-20) on the turbine wheel (1) consists of a plurality of groups of marking elements (10-15), which are disposed distributed in the direction of rotation, wherein the number of the marking elements in each group increases in one direction of rotation and reduces in the opposite direction of rotation in order to enable detection of the direction of rotation.

3. A rotary atomiser turbine as claimed in claim 1, **characterised in that** the marking (6-9; 10-15; 16-20) on the turbine wheel (1) has at least two adjacent marking elements (6,7; 16,17) with a different angular extent in order to enable detection of the direction of rotation.

4. A rotary atomiser turbine as claimed in at least one of the preceding claims, **characterised in that** the marking (6-9; 10-15; 16-20) on the turbine wheel (1) includes additional information relating to the type of the rotary atomiser turbine, the serial number of the rotary atomiser turbine or customer-specific additional information, which can be read by the rotary value transmitter.

5. A rotary atomiser turbine as claimed in claim 4, **characterised in that** the marking (6-9; 10-15; 16-20) is binary coded with the additional information by a plurality of marking elements (18-23).

6. A rotary atomiser turbine as claimed in claim 5, **characterised in that** the marking elements for the binary coding are applied to the turbine wheel (1) at predetermined angular positions and equidistantly.

7. A rotary atomiser turbine as claimed in at least one of the preceding claims, **characterised in that** the rotary value transmitter is an optical sensor and the marking (6-9; 10-15; 16-20) is an optical marking (6-9; 10-15; 16-20).

8. A rotary atomiser turbine as claimed in at least one of the preceding claims, **characterised in that** the rotary value transmitter is a magnetic field sensor and the marking (6-9; 10-15; 16-20) is magnetic.

9. A rotary atomiser turbine as claimed in at least one of the preceding claims, **characterised in that** the rotary value transmitter is a capacitive sensor and the marking (6-9; 10-15; 16-20) is dielectric.

10. A rotary atomiser turbine as claimed in at least one of the preceding claims, **characterised in that** the rotary value transmitter is a mechanical sensor and the marking (6-9; 10-15; 16-20) is a marking element, which mechanically couples the turbine wheel (1) to the sensor.

11. A rotary atomiser turbine as claimed in at least one of the preceding claims, **characterised in that** the marking (6-9; 10-15; 16-20) is applied to an end face of the turbine wheel (1).

12. A rotary atomiser turbine as claimed in at least one of the preceding claims, **characterised in that** the marking (6-9; 10-15; 16-20) is applied to a side wall surface of the turbine wheel (1).

13. A rotary atomiser with a rotary atomiser turbine as claimed in at least one of the preceding claims.

14. A method of operation for a rotary atomiser turbine with a turbine wheel (1) for driving a bell plate, wherein numerous turbine blades (4) are arranged on the bell plate side of the turbine wheel (1), with the following steps:
- causing drive gas to flow at the turbine wheel (1) or causing braking gas to flow at the turbine wheel (1) in the opposite direction in order to brake the turbine wheel (1),
**characterised by** the
- determination of the direction of rotation of the turbine wheel (1) and the
- control of the flow of the drive gas and/or the braking gas at the turbine wheel (1) in dependence on the determined direction of rotation of the turbine wheel (1).

15. An operating method as claimed in claim 14, **characterised in that** the flow of braking gas when braking the turbine wheel (1) is terminated when the direction of rotation of the turbine wheel (1) changes.

16. An operating method as claimed in claim 14 and/or claim 15, **characterised in that** the speed of rotation of the turbine wheel (1) is determined and the flow of the drive gas and/or the braking gas is controlled in dependence on both the determined direction of rotation and also the determined speed of rotation.

17. A operating method as claimed in claim 16, **characterised in that** when braking the turbine wheel (1), the flow of the braking gas is terminated when the direction of rotation of the turbine wheel (1) changes and/or when the speed of rotation of the turbine wheel (1) falls below a predetermined threshold value.

## Revendications

1. Turbine d'atomiseur rotatif pour entraîner un plateau à cloche, comprenant une roue de turbine pivotante (1) avec de nombreuses aubes de turbine (4) du côté du plateau à cloche et au moins un repère (6 à 9 ; 10 à 15 ; 16 à 20) solidaire en rotation avec la roue de turbine (1), pour actionner un capteur d'indice de rotation pour détecter la vitesse de rotation de la roue de turbine (1), dans laquelle le repère (6 à 9 ; 10 à 15 ; 16 à 20) tourne avec la roue de turbine (1) et le capteur d'indice de rotation répond au repère (6 à 9 ; 10 à 15 ; 16 à 20),
**caractérisée en ce que** le repère (6 à 9 ; 10 à 15 ; 16 à 20) comprend pour le capteur d'indice de rotation une information dépendant du sens de rotation ou **en ce qu'**un capteur d'indice de rotation supplémentaire est prévu pour reconnaître le sens de rotation.

2. Turbine d'atomiseur rotatif selon la revendication 1, **caractérisée en ce que** le repère (6 à 9 ; 10 à 15 ; 16 à 20) sur la roue de turbine (1) se compose de plusieurs groupes d'éléments de repère (10 à 15) qui sont disposés de façon répartie dans le sens de rotation, dans laquelle le nombre des éléments de repère dans chaque groupe augmente dans un sens de rotation et diminue dans le sens de rotation opposé afin de permettre la reconnaissance du sens de rotation.

3. Turbine d'atomiseur rotatif selon la revendication 1, **caractérisée en ce que** le repère (6 à 9 ; 10 à 15 ; 16 à 20) sur la roue de turbine (1) présente au moins deux éléments de repère adjacents (6, 7 ; 16, 17) avec une étendue angulaire différente afin de permettre une reconnaissance du sens de rotation.

4. Turbine d'atomiseur rotatif selon l'une quelconque des revendications précédentes, **caractérisée en ce que** le repère (6 à 9 ; 10 à 15 ; 16 à 20) sur la roue de turbine (1) comprend une information supplémentaire concernant le type de la turbine d'atomiseur rotatif, le numéro de série de la turbine d'atomiseur rotatif ou une information supplémentaire spécifique au client, qui peut être lue par le capteur d'indice de rotation.

5. Turbine d'atomiseur rotatif selon la revendication 4, **caractérisée en ce que** le repère (6 à 9 ; 10 à 15 ; 16 à 20) avec l'information supplémentaire est codé de façon binaire par plusieurs éléments de repère (18 à 23).

6. Turbine d'atomiseur rotatif selon la revendication 5, **caractérisée en ce que** les éléments de repère pour le codage binaire sont installés de façon équidistante sur la roue de turbine (1) dans des positions angulaires prédéfinies.

7. Turbine d'atomiseur rotatif selon au moins l'une quelconque des revendications précédentes, **caractérisée en ce que** le capteur d'indice de rotation est un capteur optique et le repère (6 à 9 ; 10 à 15 ; 16 à 20) est un repère optique (6 à 9 ; 10 à 15 ; 16 à 20).

8. Turbine d'atomiseur rotatif selon au moins l'une quelconque des revendications précédentes, **caractérisée en ce que** le capteur d'indice de rotation est un capteur de champ magnétique et le repère (6 à 9 ; 10 à 15 ; 16 à 20) est magnétique.

9. Turbine d'atomiseur rotatif selon au moins l'une quelconque des revendications précédentes, **caractérisée en ce que** le capteur d'indice de rotation est un capteur capacitif et le repère (6 à 9 ; 10 à 15 ; 16 à 20) est diélectrique.

10. Turbine d'atomiseur rotatif selon au moins l'une quelconque des revendications précédentes, **caractérisée en ce que** le capteur d'indice de rotation est un capteur mécanique et le repère (6 à 9 ; 10 à 15 ; 16 à 20) est un élément de couplage qui accouple la roue de turbine (1) mécaniquement au capteur.

11. Turbine d'atomiseur rotatif selon au moins l'une quelconque des revendications précédentes, **caractérisée en ce que** le repère (6 à 9 ; 10 à 15 ; 16 à 20) est installé sur une face d'extrémité de la roue de turbine (1).

12. Turbine d'atomiseur rotatif selon au moins l'une quelconque des revendications précédentes, **caractérisée en ce que** le repère (6 à 9 ; 10 à 15 ; 16 à 20) est installé sur une surface latérale de la roue de turbine (1).

13. Atomiseur rotatif avec une turbine d'atomiseur rotatif selon l'une quelconque des revendications précédentes.

14. Procédé d'exploitation pour une turbine d'atomiseur rotatif avec une roue de turbine (1) pour entraîner un plateau à cloche, dans lequel de nombreuses aubes de turbine (4) sont disposées sur la roue de turbine (1) du côté du plateau à cloche, le procédé comprenant les étapes suivantes consistant à :
- souffler sur la roue de turbine (1) avec un gaz d'entraînement ou souffler en sens opposé sur la roue de turbine (1) avec un gaz de freinage pour freiner la roue de turbine (1),
**caractérisé par** les étapes consistant à
- déterminer le sens de rotation de la roue de turbine (1) ; et
- commander le soufflage sur la roue de turbine (1) avec le gaz d'entraînement et/ou le gaz de freinage en fonction du sens de rotation déterminé de la roue de turbine (1).

15. Procédé d'exploitation selon la revendication 14, **caractérisé en ce que** le soufflage avec le gaz de freinage est arrêté lors du freinage de la roue de turbine (1) lorsque le sens de rotation de la roue de turbine (1) change.

16. Procédé d'exploitation selon la revendication 14 et/ou la revendication 15, **caractérisé en ce que** la vitesse de rotation de la roue de turbine (1) est déterminée et le soufflage avec le gaz d'entraînement et/ou le gaz de freinage est commandé en fonction à la fois du sens de rotation déterminé et de la vitesse de rotation déterminée.

17. Procédé d'exploitation selon la revendication 16, **caractérisé en ce que** lors du freinage de la roue de turbine (1), le soufflage avec le gaz de freinage est arrêté lorsque le sens de rotation de la roue de turbine (1) change et/ou lorsque la vitesse de rotation de la roue de turbine (1) est inférieure à une valeur limite prédéfinie.
